# EUROPEAN PATENT SPECIFICATION

(11) **EP 2 532 876 B1**
(45) Date of publication and mention of the grant of the patent: **09.01.2019**
(21) Application number: 11739868.5
(22) Date of filing: 04.02.2011
(51) Int. Cl.: F02M 37/10, F02M 37/00, F02M 37/22, B01D 35/027

(54) **FUEL SUPPLY DEVICE**
KRAFTSTOFFZUFÜHRVORRICHTUNG
DISPOSITIF D'ALIMENTATION EN CARBURANT

(30) Priority: 04.02.2010 JP 2010023478
(43) Date of publication of application: 12.12.2012
(73) Proprietor: Mitsuba Corporation, Kiryu-shi Gunma 376-8555 (JP); Honda Motor Co., Ltd., Minato-ku Tokyo 107-8556 (JP)
(72) Inventor: YAMAMOTO Toshiyuki, Kiryu-shi Gunma 376-8555 (JP); MIYAKI Atsushi, Kiryu-shi Gunma 376-8555 (JP); HASHIMOTO Kiyoshi, Kiryu-shi Gunma 376-8555 (JP); UENO Masaki, Wako-shi Saitama 351-0193 (JP); SUZUKI Shosuke, Wako-shi Saitama 351-0193 (JP)
(74) Representative: Cabinet Laurent & Charras
(86) International application number: PCT/JP2011/052385
(87) International publication number: WO 2011/096520

(56) References cited:
- WO-A1-2008/030707
- JP-A- 9 195 875
- JP-A- 2004 044 619
- JP-A- 2008 286 382
- JP-U- H0 349 367
- JP-U- H0 349 367

## Description

### Technical Field

The present invention relates to a fuel supply device.

Priority is claimed on Japanese Patent Application No. 2010-023478 filed on February 4, 2010, the content of which is incorporated herein by reference.

### Background Art

In general, as a fuel supply device for a vehicle such as a motorcycle or a four-wheel vehicle, in many cases, a so-called in-tank type is adopted in which a fuel pump is disposed in a fuel tank and a fuel supply device is immersed in fuel in the fuel tank. In the fuel pump of this type of fuel supply device, a pump section which pumps up fuel, thereby pumping the fuel to an internal-combustion engine (an engine), is provided on the bottom surface side of the fuel tank. Further, at the top of the pump section, a motor section which drives the pump section is provided, and a suction filter (a filter) is attached to the bottom of the pump section through a fuel suction port (a fuel suction section).

The suction filter filters fuel which is pumped up by the pump section, thereby preventing foreign matters in the fuel tank from entering to the pump section.

In this manner, it is attempted to improve the attachment workability of the suction filter by fixing the projection of the pump section through the metal bracket.

### Related Art Document

### Patent Document

Patent Document 1: Japanese Unexamined Patent Application, First Publication No. 2006-9611
Patent Document JP H03 49367 U relates to a filter element having a cylindrical body and a filter medium which is disposed between a first end and a second end and along the lateral side of the filter element.
Patent Document WO 2008/030707 A1 relates to filter elements and assemblies which can separate contaminants from oil or fuel.

### Disclosure of the Invention

### Problems to be Solved by the Invention

However, in the fuel supply device in the related art described above, since there is a need to separately prepare the metal bracket in order to attach the suction filter to the fuel suction section, an increase in the number of components becomes a problem. Further, since the metal bracket is swaged and fixed to the flange section of the suction filter by using a jig, the attaching work and the dismounting work of the suction filter become complicated. For this reason, there is a problem in that it is difficult to improve the workability of attaching the suction filter to the fuel suction section. Means for Solving the Problems

The present invention has been made in view of the above-described problems and has an object to provide a fuel supply device which allows the work of attaching and dismounting a suction filter to be easily performed without increasing the number of components.

These problems are solved by a fuel supply system according to claim 1. Preferred embodiments are defined in the dependent claims.
[1] According to an aspect of the invention, there is provided a fuel supply device including: a fuel pump unit having a fuel pump which is disposed in a fuel tank and pumps up fuel in the fuel tank, thereby pumping the fuel to an internal-combustion engine, and a support section which fixes the fuel pump to an inner wall surface of the fuel tank; and a suction filter which is mounted on a fuel suction section provided at the fuel pump unit and filters the fuel that is suctioned into the fuel pump, wherein the suction filter has a connection section which protrudes toward the fuel pump unit and is also coaxially connected to the fuel suction section, and at both the fuel pump unit and the connection section, fixing mechanisms are provided which maintain the connection state of the connection section in cooperation with each other in a case where the connection section has been rotated around an axis thereof in a state where the connection section has been connected to the suction section.
[2] In the fuel supply device according to the above [1], each of the fuel suction section and the connection section may have a tubular shape and also the connection section may be connected to the fuel suction section, and the fixing mechanisms may include a first engagement section provided on the outer circumferential surface of the connection section, and a second engagement section which is formed at the fuel pump unit and accepts the first engagement section from a circumferential direction, thereby being engaged with the first engagement section.
[3] In the fuel supply device according to above [2], the first engagement section may extend in a circumferential direction of the connection section, be elastically deformable, and be provided with a projection which restricts falling-out from the second engagement section.
[4] In the fuel supply device according to above [3], the projection may be disposed at a middle position in a longitudinal direction of the first engagement section, and a portion further on the leading end side than the projection of the first engagement section may form an input portion which accepts an external force when elastically deforming the first engagement section.
[5] In the fuel supply device according to above [4], at least one of the input portions may protrude further to the outside in a radial direction than the outer circumferential surface of the fuel pump unit in a state where the connection section has been connected to the fuel suction section.
[6] The fuel supply device according to any one of the above [1] to [5] may further include: a convex portion for preventing incorrect attachment provided at one of an outer peripheral edge on the fuel pump unit side of the connection section and the fuel pump unit; and a groove portion which is provided at other one of the outer peripheral edge on the fuel pump unit side of the connection section and the fuel pump unit, and in which the convex portion for preventing incorrect attachment can be fitted, wherein the size in a circumferential direction of the groove portion may be set so as to permit the turning around the axis of the convex portion for preventing incorrect attachment only by a predetermined range.
[7] In the fuel supply device according to the above [3], the first engagement section may be provided in a pair at positions which are point-symmetrical with an axis of the connection section as the center, and also the projection may be provided in a protruding state on the radially inner surface side of each of the first engagement sections, the surface on the front side in a direction of rotation of each of the projections may form a first inclined surface which is orthogonal to the direction of rotation or is inclined toward the direction of rotation as it goes to the inside in a radial direction, the second engagement section may be provided in a pair at the fuel pump unit, a concave portion which accepts each of the first engagement sections may be formed on the base end side of each of the second engagement sections, while a falling-out prevention wall which restricts the falling-out in an axial direction of each of the first engagement sections inserted into the concave portion may be formed on the leading end side of each of the second engagement sections, and the side surface on the side accepting each first engagement section, of each of the falling-out prevention walls, may form a second inclined surface which is orthogonal to the direction of rotation or is inclined toward the opposite side to the direction of rotation as it goes to the outside in the radial direction.

### Effects of the Invention

According to the fuel supply device related to the aspect of the above [1], if in a state where the connection section of the suction filter is coaxially connected to the fuel suction section provided at the fuel pump unit, the connection section is rotated around the axis thereof, the fuel suction section and the connection section cooperate with each other, whereby the connection state of the connection section is maintained. For this reason, there is no need to separately prepare a member such as a metal bracket for fixing the suction filter in attaching the connection section of the suction filter to a fuel suction port, so that it is possible to reduce the number of components. Further, since the suction filter is directly attached to the fuel suction port, it is possible to easily perform the attaching and dismounting work of the suction filter without using a jig. Accordingly, it is possible to improve the workability of attaching the suction filter to the fuel suction port.

Further, according to the fuel supply device related to the above [2], the first engagement section can be easily engaged with the second engagement section by rotating the connection section around the axis in a state where the connection section is connected to the fuel suction section. Further, since it is possible to make the fixing mechanisms be a simple structure, the manufacturing cost of the fuel supply device can be reduced.

Further, according to the fuel supply device related to the above [3], since the first engagement section extends in the circumferential direction of the tubular connection section, even if the first engagement section is formed at a length required to engage with the second engagement section, the first engagement section does not protrude in the direction of the axis. For this reason, it is possible to reduce the length of the connection section in the axis direction thereof.

Further, the first engagement section is provided with the projection which restricts falling-out from the second engagement section, whereby dropping-out of the fuel suction section from the connection section can be reliably prevented.

Further, according to the fuel supply device related to the above [4], the portion further on the leading end side than the projection of the first engagement section forms the input portion which accepts an external force when elastically deforming the first engagement section. Due to this configuration, the input portion acts as a power point for elastically deforming the first engagement section and is located at a position farther from a supporting point than the projection that is a point of action. For this reason, it is possible to separate the projection from the second engagement section by elastically deforming the first engagement section by applying to the input portion a smaller external force than the case of directly applying an external force with the projection as a power point. In this way, it is possible to easily release the engagement state of the first engagement section and the second engagement section. Accordingly, it is possible to improve the dismounting performance of the suction filter.

Further, according to the fuel supply device related to the above [5], since at least one of the input portions protrudes further from the outside in a radial direction than the outer circumferential surface of the fuel pump unit in a state where the connection section has been connected to the fuel suction section, it is easier to apply an external force to the input portion. For this reason, it is possible to more easily attach the suction filter and to improve the dismounting performance.

Further, according to the fuel supply device related to the above [6], the size in a circumferential direction of the groove portion is set so as to permit the turning around the axis of the convex portion for preventing incorrect attachment only by a predetermined range. For this reason, in a case where the connection section is not mounted on the fuel suction section in a given direction, the convex portion for preventing incorrect attachment is not fitted into the groove portion. As a result, at the time of attaching the suction filter, since the first engagement section of the connection section is not externally fitted to the second engagement section of the fuel suction section until the first engagement section is located at a completely connectable position, it is possible to prevent incorrect attachment of the suction filter.

Further, according to the fuel supply device related to the above [7], in a case where the connection section is wrongly attached to the fuel suction section, even if the surface on the front side in a direction of rotation of the projection comes into contact with the falling-out prevention wall of the second engagement section, a radially outward force does not act on the first engagement section.

That is, the surface on the front side in a direction of rotation of the projection of the first engagement section forms the first inclined surface which is orthogonal to the direction of rotation or is inclined toward the direction of rotation as it goes to the inside in the radial direction, while the side surface on the side accepting the first engagement section, of the falling-out prevention wall, forms the second inclined surface which is orthogonal to the direction of rotation or is inclined toward the opposite side to the direction of rotation as it goes to the outside in the radial direction. For this reason, even if the first inclined surface and the second inclined surface come into contact with each other, so that a force in a radial direction acts on the second inclined surface from the first inclined surface, the force acts radially or inward radially at the second inclined surface. As a result, the radially outward elastic deformation of the first engagement section is prevented.

By the above, the projection of the first engagement section can be prevented from being placed on the leading end of the second engagement section, so that it becomes possible to reliably prevent incorrect attachment of the connection section.

### Brief Description of Drawings

FIG. 1 is a perspective view showing a schematic configuration of a fuel supply device in a first embodiment of the invention.
FIG. 2 is a perspective view showing a schematic configuration of a lower cup in the embodiment.
FIG. 3 is a perspective view showing a schematic configuration of a suction filter in the embodiment.
FIG. 4 is an explanatory diagram showing a state where the suction filter is mounted on the lower cup in the embodiment.
FIG. 5 is an explanatory diagram showing a state where the suction filter is mounted on the lower cup in the embodiment.
FIG. 6 is an explanatory diagram showing a state where the suction filter is wrongly attached to the lower cup in the embodiment.
FIG. 7 is a perspective view showing a schematic configuration of a connecting pipe in a second embodiment of the invention.
FIG. 8 is a perspective view showing a schematic configuration of a support section in the embodiment.

### Description of Embodiments

### (First Embodiment)

Hereinafter, a first embodiment of a fuel supply device according to the invention will be described with reference to the drawings. In addition, in the following drawings, in order to show each member at a recognizable size, the scale of each member is appropriately changed.

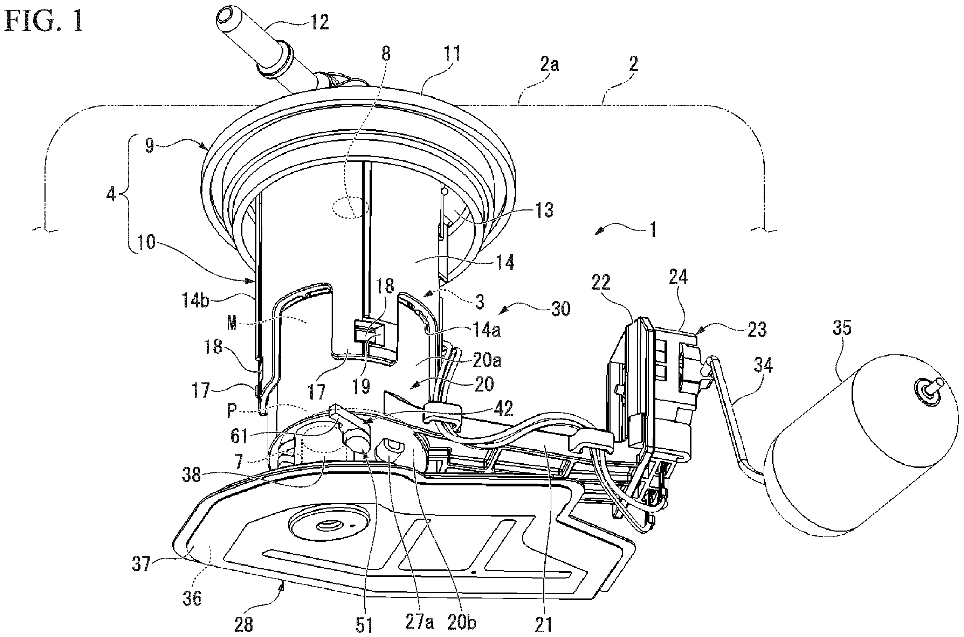

FIG. 1 is a perspective view of a fuel supply device 1.

As shown in the drawing, the fuel supply device 1 is immersed in fuel in a fuel tank 2 of, for example, an automobile, a motorcycle, or the like and pumps up the fuel, thereby pumping the fuel to an internal-combustion engine (not shown).

The fuel supply device 1 includes a fuel pump unit 30 and a suction filter 28 disposed on the suction side of the fuel pump unit 30. In addition, in the following description, the suction side of the fuel pump unit 30 is set to be a lower side and the opposite side thereto is set to be an upper side.

The fuel pump unit 30 includes a fuel pump 3 and a support section 4. The fuel pump 3 is composed of a pump section P disposed on the lower side and a motor section M mounted on the upper side of the pump section P. As the pump section P, for example, a non-displacement type regenerative pump having an impeller is used, and the pump is driven by the motor section M. As the motor section M, for example, a direct-current motor with brushes is used.

A fuel suction section (a suction pipe) 7 is provided on the lower side of the pump section P and fuel is pumped up from the fuel suction section 7 into the fuel pump 3. Further, a discharge port 8 is provided on the upper side of the motor section M. Fuel which has passed through the inside of the motor section M is pumped from the discharge port 8 to the outside of the fuel pump 3.

The support section 4 is composed of a flange unit 9 fixed to an upper wall 2a among the inner wall surfaces of the fuel tank 2, an upper cup 10 which is provided on the lower side of the flange unit 9 and also covers the outside of the fuel pump 3, and a lower cup 20 which is mounted on the upper cup 10 and also covers the lower side of the fuel pump 3.

At the flange unit 9, an approximately circular plate-shaped unit main body 11 made of resin is provided. The unit main body 11 is fixed to the upper wall 2a in a state where it is inserted from the outside (the upper side) of the fuel tank 2 into an opening portion (not shown) formed in the upper wall 2a of the fuel tank 2. Therefore, the upper surface of the flange unit 9 is in a state of being exposed to the outside of the fuel tank 2.

Further, at the flange unit 9, the discharge port 8 of the fuel pump 3 and a fuel extraction pipe 12 communicating with the discharge port 8 are provided. That is, the fuel in the fuel tank 2 is pumped from the discharge port 8 through the fuel extraction pipe 12 to the internal-combustion engine.

In addition, at the flange unit 9, for example, a check valve or a pressure regulator is provided between a leading end of the fuel extraction pipe 12 and the discharge port 8, so that given fuel pressure can be secured.

Further, on the upper surface of the flange unit 9, a connector (not shown) is provided. An external connector connected to an external power supply is fitted to the connector. The connector is made so as to be electrically connected to the motor section M of the fuel pump 3 and a sender gauge 23, whereby the motor section M is driven.

Further, a concave portion 13 is formed at the central area of the lower surface of the unit main body 11, and the upper cup 10 is formed integrally with the concave portion 13.

At the upper cup 10, a tubular cup main body 14 made of resin or the like is provided. The cup main body 14 is formed so as to cover the outer circumferential surface of the fuel pump 3 and formed so as to be able to insert the fuel pump 3 from an opening portion 14a formed in a lower end of the cup main body 14. Further, an outer circumferential surface 14b of the cup main body 14 extends from the flange unit 9 down to the approximate middle in an axial direction of the fuel pump 3.

Further, at the cup main body 14, four engagement pieces 17 extending toward the lower side in an axial direction of the opening portion 14a from a peripheral edge of the opening portion 14a are formed at equally-spaced intervals in the circumferential direction of the opening portion 14a. The engagement piece 17 is formed so as to be able to be elastically deformed toward the outside in the direction of an axis of the cup main body 14 and is caught in the lower cup 20 by the elastic force, thereby being mechanically held. Positioning in the direction of an axis and the circumferential direction of the lower cup 20 is performed by adjusting an engagement position of the engagement piece 17 with the lower cup 20.

The engagement piece 17 extends to the lower side than the motor section M of the fuel pump 3. Further, an engagement hole 19 of the engagement piece 17 is engaged with an engagement protruding portion 18 which is formed at the lower cup 20 which is described below.

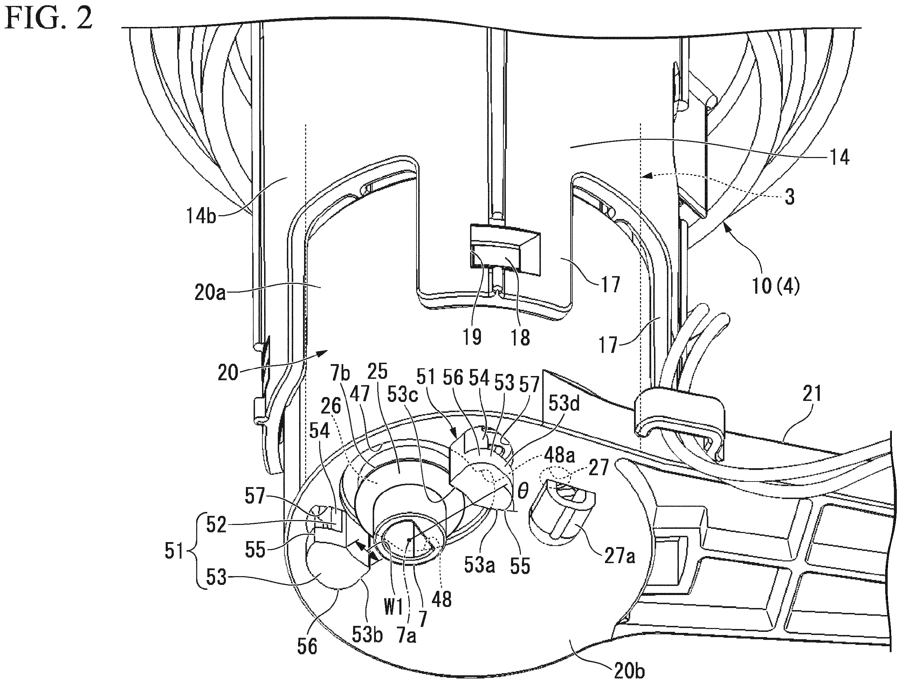

FIG. 2 is a perspective view of the lower cup 20.

As shown in FIGS. 1 and 2, the bottomed tube-shaped lower cup 20 formed of resin or the like is disposed on the lower side of the fuel pump 3, thereby supporting the fuel pump 3. The outer diameter of an outer circumferential surface 20a of the lower cup 20 is formed slightly smaller than the inner diameter of the outer circumferential surface 14b of the upper cup 10 (the cup main body 14).

On the outer circumferential surface 20a of the lower cup 20, the engagement protruding portion 18 capable of being engaged with the engagement hole 19 of the engagement piece 17 is formed. The engagement protruding portion 18 is engaged with the engagement hole 19, whereby the lower cup 20 is held in the upper cup 10. Then, the fuel pump 3 is supported by the integrated upper cup 10 and the lower cup 20.

Further, an end section (a bottom section) 20b is provided on the lower side of the lower cup 20. At the end section 20b, a support plate 21 extending to the outside in a radial direction of the lower cup 20 is formed integrally. At a leading end of the support plate 21, a gauge mounting plate 22 is integrally formed so as to follow the direction of an axis of the lower cup 20, as shown in FIG. 1. At the gauge mounting plate 22, the sender gauge 23 is provided. The sender gauge 23 is provided with a gauge main body 24 that is a liquid-level gauge which detects the remaining amount, that is, the liquid level position of fuel in the fuel tank 2 and is formed in a box shape, a rocking arm 34 which is provided so as to be able to be turned with respect to the gauge main body 24, and a float 35 which is provided at a leading end of the rocking arm 34 and can float on the liquid surface of fuel.

Further, at a position further on the support plate 21 side than the central portion of the end section 20b, a degassing hole 27 is formed so as to pass through the end section 20b. Fuel vapor generated in the fuel pump 3 is discharged by the degassing hole 27. Further, a cover 27a which regulates a discharge direction of the fuel vapor that is discharged from the degassing hole 27 is integrally formed at the end section 20b so as to surround the degassing hole 27.

Further, in the end section 20b, a through-hole 26 is formed at a position corresponding to a suction pipe 7 of the fuel pump 3 so as to pass through the end section 20b. The diameter of the through-hole 26 is formed in the size of allowing the suction pipe 7 to be inserted therein. The suction pipe 7 is inserted into the through-hole 26 and also protrudes downward. An O-ring 25 is fitted to an opening end face 7b of a base of the portion of the suction pipe 7 protruding from the through-hole 26, so that sealing between the suction pipe 7 and a connection section (a connecting pipe) 38 (described later) is secured.

Further, at the end section 20b, a pair of second engagement sections 51 (described later) is provided in a protruding state at positions which are point-symmetrical with the through-hole 26 as the center.

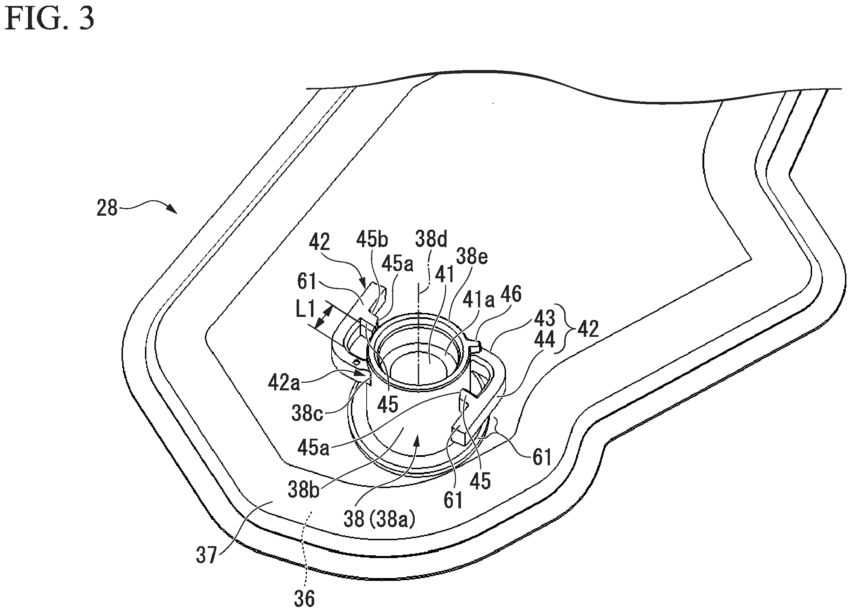

FIG. 3 is a perspective view of the suction filter 28.

As shown in FIGS. 1 and 3, the suction filter 28 is provided with a filtering medium 36 and a welding section 37 formed at an outer peripheral edge of the filtering medium 36. The filtering medium 36 is a non-woven fabric formed in a bag shape and the welding section 37 is formed by welding the outer peripheral edges of the filtering medium 36 together.

At the place corresponding to the suction pipe 7 of the fuel pump 3, of the suction filter 28, a connecting pipe 38 is provided to protrude upward. The connecting pipe 38 is coaxially connected to the suction pipe 7, thereby making the filtering medium 36 and the suction pipe 7 communicate with each other and also fixing the suction filter 28 to the lower cup 20.

The connecting pipe 38 is formed of resin, and a lower opening of the connecting pipe 38 is covered by the filtering medium 36. In this way, the fuel in the fuel tank 2 flows into the connecting pipe 38 through the filtering medium 36. The fuel that flows into the connecting pipe 38 is pumped up to the fuel pump 3.

Further, an upper opening of the connecting pipe 38 protrudes upward from the welding section 37. The portion protruding from the welding section 37, of the connecting pipe 38, becomes a projecting portion 38a. Then, at an outer peripheral edge 38e of the upper side (a leading end) of the projecting portion 38a, a convex portion for preventing incorrect attachment 46 is formed at one place.

The inner diameter of the upper opening of the connecting pipe 38 is set to be a size in which the connecting pipe 38 can be externally fitted to the suction pipe 7. The inner circumferential surface of the projecting portion 38a is reduced in diameter from a middle position toward the lower side. A step provided at the boundary between a diameter-reduced area (a reduced diameter portion 41) and the upper side than the reduced diameter portion 41 of the inner circumferential surface of the projecting portion 38a is set to be a stepped surface 41a. The above-described O-ring 25 is disposed between the stepped surface 41a and the end section 20b of the lower cup 20.

On an outer circumferential surface 38b of the projecting portion 38a, a pair of elastically deformable first engagement sections (engagement claws) 42 is provided on the slightly upper side than the middle in the direction of an axis 38d of the projecting portion 38a so as to become point-symmetrical with the axis 38d of the projecting portion 38a as the center. The engagement claw 42 is formed in an approximately quadrangular shape in vertical cross-section and in an approximate L-shape in transverse cross-section. If the place where a base portion 42a of the engagement claw 42 is provided, of the outer circumferential surface 38b, is set to be a contact point 38c, the portion (a rising portion 43) on the base portion 42a side of the engagement claw 42 extends toward the direction of a tangent line (not shown) at the contact point 38c. Further, the engagement claw 42 is bent from the leading end side of the rising portion 43 and also extends along a circumferential direction. The portion further on the front side than the leading end side of the rising portion 43, of the engagement claw 42, is set to be a claw main body portion 44.

On the radially inner surface side at a middle position in a longitudinal direction of the claw main body portion 44, a projection 45 which restricts falling-out from the second engagement section 51 (described later) is provided in a protruding state toward the projecting portion 38a side and so as to be approximately orthogonal to the claw main body portion 44.

On the surface on the front side in a direction of rotation of each projection 45, a first inclined surface 45b is formed which is orthogonal to the direction of rotation or is inclined toward the direction of rotation as it goes to the inside in a radial direction. Further, on the side surface on the axis 38d side among the side surfaces of each projection 45, a third inclined surface 45a is configured which is inclined toward the opposite direction of rotation as it goes to the inside in the radial direction.

Further, the portion further on the leading end side than the projection 45 of the claw main body portion 44 forms an input portion 61 which accepts an external force when elastically deforming the claw main body portion 44.

Here, as shown in FIG. 2, in the end section 20b, a groove 47 in which an upper end of the connecting pipe 38 can be fitted is formed so as to surround the through-hole 26. Further, in the end section 20b, a small groove 48 in which the convex portion for preventing incorrect attachment 46 of the connecting pipe 38 can be fitted is formed in an approximate arc shape in a plan view. The size in a circumferential direction of the small groove 48 is set such that the convex portion for preventing incorrect attachment 46 can be turned around an axis 7a by a predetermined range. In this way, the connecting pipe 38 can be rotated around the axis 7a only by a predetermined range after the connecting pipe 38 is connected to the suction pipe 7. Further, the small groove 48 is communicated with the portion on the middle side of the end section 20b, of an outer peripheral edge of the groove 47, and a step 48a is formed at the boundary line between the groove 47 and the small groove 48.

Further, at places corresponding to the engagement claws 42, of the outer peripheral edge of the groove 47 of the end section 20b, the pair of second engagement sections 51 is provided in a protruding state so as to become point-symmetrical with the through-hole 26 as the center. Further, the respective second engagement sections 51 are formed so as to be able to be engaged with the pair of engagement claws 42. The second engagement section 51 is composed of a supporting portion 52 formed so as to protrude downward from the end section 20b, and a falling-out prevention wall 53 which is integrally formed at a leading end of the supporting portion 52 and extends toward the outside in a radial direction of the suction pipe 7. By the supporting portion 52 and the falling-out prevention wall 53, an acceptance concavity portion 54 capable of accepting each engagement claw 42 from a circumferential direction is configured on the base end side of each of the second engagement sections 51.

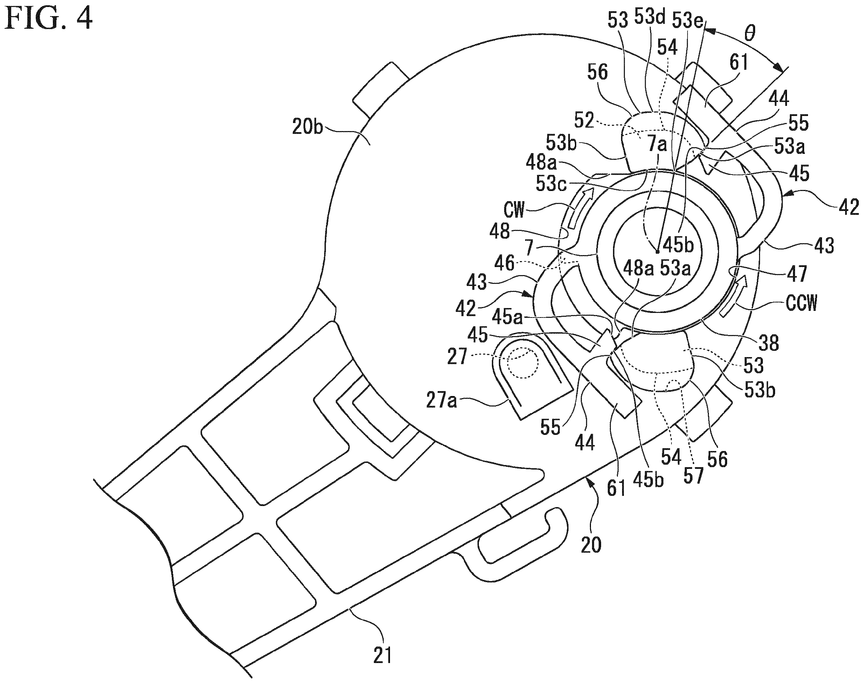

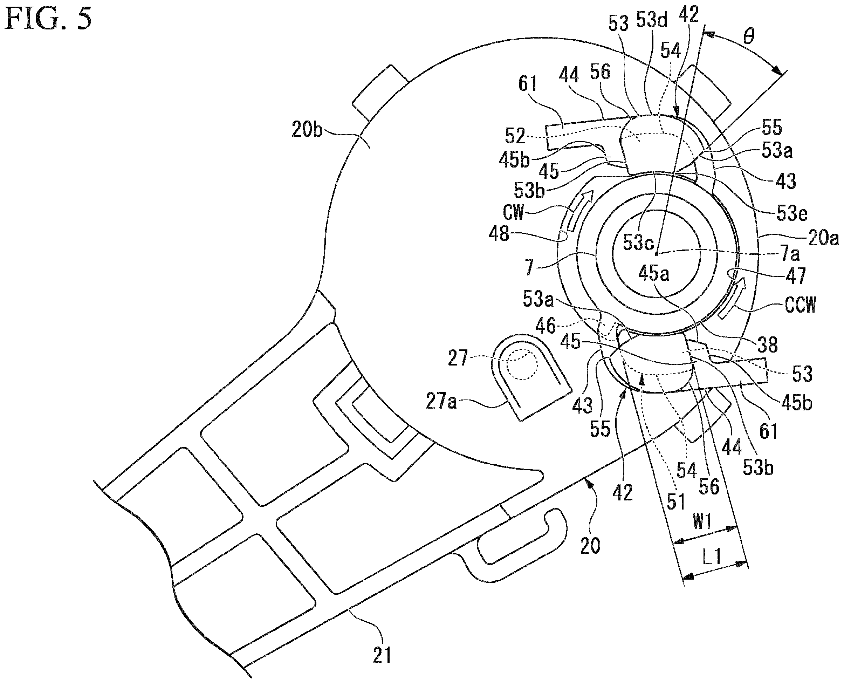

By such a configuration, as shown in FIG. 4, after the connecting pipe 38 is externally fitted to the suction pipe 7 with the position of the convex portion for preventing incorrect attachment 46 fitted to the position of the small groove 48, if the connecting pipe 38 is rotated around the axis 38d of the connecting pipe 38 toward the leading end side of the claw main body portion 44, the claw main body portion 44 is inserted into and fixed to the acceptance concavity portion 54 of each second engagement section 51, as shown in FIG. 5.

The engagement claw 42 and the second engagement section 51 are used as fixing mechanisms for engaging the suction filter 28 with the lower cup 20.

Here, a width W1 in the circumferential direction of the supporting portion 52 of the second engagement section 51 is set so as to become approximately equal to a distance L1 between the projection 45 and the rising portion 43. In this way, when the engagement claws 42 have been respectively inserted into the acceptance concavity portions 54 of the respective second engagement sections 51, a state is created where the supporting portion 52 of each of the second engagement sections 51 is pinched by the rising portion 43 and the projection 45 of each of the engagement claws 42. That is, when the second engagement section 51 and the engagement claw 42 have been engaged with each other, the projection 45 restricts the movement of the engagement claw 42 in a direction of falling out from the second engagement section 51.

Further, as shown in FIG. 5, when the second engagement section 51 and the engagement claw 42 have been engaged with each other, the leading end (the input portion) 61 of the claw main body portion 44 of the engagement claw 42 on at least one side among the pair of engagement claws 42 is in a state of protruding further to the outside in the radial direction than the outer circumferential surface 20a of the lower cup 20.

Further, when the second engagement section 51 and the engagement claw 42 have been engaged with each other, the falling-out prevention wall 53 of the second engagement section 51 restricts the upward movement of the engagement claw 42, thereby restricting falling-out in a direction of the axis 38d of each engagement claw 42 inserted into the concavity portion 54.

The falling-out prevention wall 53 is a flat plate-shaped wall formed in an approximate fan shape in a plan view as seen from above.

Here, the side surface on the side accepting the engagement claw 42, of the side surfaces of the falling-out prevention wall 53, forms a second inclined surface 53a which is orthogonal to the direction of rotation of the suction pipe 7 or is inclined at an inclination angle θ toward the opposite side to the direction of rotation as it goes to the outside in the radial direction. Further, a side surface opposite to the second inclined surface 53a is set to be a side surface 53b. An end on the outside in the radial direction of the suction pipe 7, of the second inclined surface 53a, is set to be a corner portion 55, and an end on the inside in the radial direction is set to be an end portion 53e. The inclination angle θ of the second inclined surface 53a is an angle which is made by intersection of a straight line connecting the axis 7a of the suction pipe 7 and the end portion 53e and the second inclined surface 53a.

The inclination angle θ is set so as to follow the first inclined surface 45b (refer to FIG. 4) of the projection 45 when the second inclined surface 53a and the projection 45 of the engagement claw 42 are present at positions overlapping in the direction of the axis 7a.

An outer circumferential side surface 53d is provided to extend from the corner portion 55 to the side surface 53b. The side surface 53b is orthogonal to the direction of rotation of the suction pipe 7 and the outer circumferential side surface 53d is curved so as to bulge toward the outside in the radial direction of the suction pipe 7.

On the other hand, at an area of the boundary line between the side surface 53b and the outer circumferential side surface 53d, in place of the corner portion 55, a round chamfered portion 56 may also be formed. Further, in the end section 20b, an opening portion 57 described previously is formed at a position corresponding to a projection portion of the falling-out prevention wall 53.

Next, the mounting and dismounting procedure of the suction filter 28 will be described on the basis of FIGS. 2 to 6.

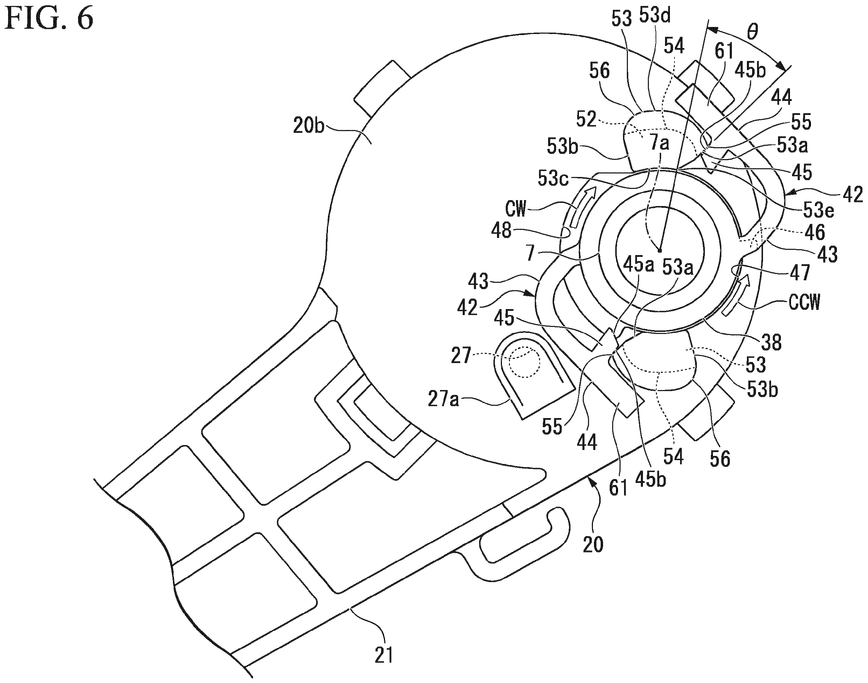

FIG. 2 is a diagram showing a schematic configuration of the lower cup 20, and FIG. 3 is a diagram showing a schematic configuration of the suction filter 28. FIGS. 4 to 6 show a state where the connecting pipe 38 of the suction filter 28 is mounted on the lower cup 20, wherein FIGS. 4 and 5 are explanatory diagrams showing a state where the connecting pipe 38 is normally attached and FIG. 6 is an explanatory diagram showing a state where the connecting pipe 38 is wrongly attached.

Describing a procedure for attaching the fuel supply device 1, first, after the fuel pump 3 is assembled, the fuel pump 3 is inserted into the cup main body 14 (the upper cup 10). If the fuel pump 3 is inserted into the cup main body 14 (the upper cup 10), the lower cup 20 is inserted into the cup main body 14 (the upper cup 10). Then, if the lower cup 20 is inserted into the cup main body 14 (the upper cup 10), the engagement protruding portion 18 of the lower cup 20 and the engagement piece 17 of the upper cup 20 are engaged with each other, so that the lower cup 20 is held on the cup main body 14.

In this way, assembling the fuel pump 3, the upper cup 10, and the lower cup 20 is completed. By attaching the fuel pump 3, the upper cup 10, and the lower cup 20, a state is created where the suction pipe 7 of the fuel pump 3 protrudes to the lower side through the through-hole 26 which is provided in the end section 20b of the lower cup 20. Subsequently, the O-ring 25 is fitted to the base (the opening end face) of the portion protruding from the through-hole 26, of the suction pipe 7 (refer to FIG. 2).

Subsequently, the connecting pipe 38 is externally fitted to the suction pipe 7 in a state where the axis 38d of the connecting pipe 38 of the suction filter 28 conforms to the axis 7a of the suction pipe 7.

Before that, the position of each of the engagement claws 42 of the connecting pipe 38 is adjusted so as to become a position which does not interfere with each of the second engagement sections 51 which are provided in a protruding state at the lower cup 20. Further, the convex portion for preventing incorrect attachment 46 of the connecting pipe 38 is adjusted so as to be at a position corresponding to the groove portion (the small groove) 48 of the lower cup 20. As shown in FIG. 2, the size in the circumferential direction of the small groove 48 is set so as to permit the turning around of the axis 7a of the convex portion for preventing incorrect attachment 46 only by a predetermined range.

If the suction pipe 7 is inserted into the connecting pipe 38 in this state, the convex portion for preventing incorrect attachment 46 of the connecting pipe 38 is fitted into the small groove 48 and also comes into contact with the step 48a of the boundary line between the groove 47 and the small groove 48. Then, the O-ring 25 is compressed toward the direction of the axis 38d between the stepped surface 41a shown in FIG. 3 and the opening end face 7b of the suction pipe 7. In this way, the clearance between the inner circumferential surface of the connecting pipe 38 and the outer circumferential surface of the suction pipe 7 is sealed by the O-ring 25.

Subsequently, the connecting pipe 38 is rotated around the axis 7a of the suction pipe 7 in the counter-clockwise direction in a state where the suction pipe 7 is inserted into the connecting pipe 38. In FIG. 4, a counter-clockwise rotation direction is shown as an arrow CCW. Then, the third inclined surface 45a of the projection 45 comes into contact with the supporting portion 52 of the second engagement section 51. If the connecting pipe 38 is further rotated around the axis 7a from here, a force in a radial direction acts radially outward at the third inclined surface 45a. As a result, the engagement claw 42 is pushed and spread radially outward and at the same time, the projection 45 is placed on the radially outer side surface of the supporting portion 52.

If the connecting pipe 38 is further rotated around the axis 7a, the radially inner side surface of the engagement claw 42 passes the radially outer side surface of the supporting portion 52.

At that time, a radially inward restoring force acts on the engagement claw 42, so that both ends in the circumferential direction of the supporting portion 52 are pinched by the projection 45 of the engagement claw 42 and the radially inner side surface of the rising portion 43 (refer to FIG. 5).

At this time, the movement of the engagement claw 42 in a direction of falling out from the second engagement section 51 is restricted by the projection 45. As a result, the rotation around the axis 7a of the connecting pipe 38 is restricted. Further, the movement in the direction of the axis 7a of the engagement claw 42 is restricted by the falling-out prevention wall 53 of the second engagement section 51. By the above, as shown in FIG. 5, the connecting pipe 38 is externally fitted and fixed to the suction pipe 7, so that mounting of the suction filter 28 on the lower cup 20 is completed.

On the other hand, in the case of dismounting the suction filter 28 from the lower cup 20, the claw main body portion 44 is elastically deformed radially outward by inputting an external force to each of the input portions 61 of the pair of engagement claws 42. At this time, as shown in FIG. 5, in a state where the second engagement section 51 and the engagement claw 42 are engaged with each other, since the input portion 61 of the engagement claw 42 on at least one side among the pair of engagement claws 42 is in a state of protruding further to the outside in the radial direction than the outer circumferential surface 20a of the lower cup 20, it is possible to easily apply an external force to a protruding portion of the input portion 61.

In this manner, by applying an external force to both the input portions 61 of the respective engagement claws 42, the projection 45 of each of the engagement claws 42 is separated from the supporting portion 52 of each of the second engagement sections 51, so that the engagement state of each of the second engagement sections 51 and each of the engagement claws 42 is released.

Subsequently, the connecting pipe 38 is rotated around the axis 7a of the suction pipe 7 in the clockwise direction in a state where the engagement state of the second engagement section 51 and the engagement claw 42 has been released. In FIG. 4, a clockwise rotation direction is shown as an arrow CW. Then, the engagement claw 42 is drawn out of the acceptance concavity portion 54 of the second engagement section 51. In this way, the connecting pipe 38 is dismounted from the suction pipe 7.

Next, a case where the connecting pipe 38 is wrongly attached to the suction pipe 7 in a state where the position of the convex portion for preventing incorrect attachment 46 of the connecting pipe 38 and the position of the small groove 48 of the lower cup 20 are out of alignment will be described on the basis of FIG. 6.

As shown in the drawing, if the connecting pipe 38 is tried to be externally fitted to the suction pipe 7 in this state, the convex portion for preventing incorrect attachment 46 comes into contact with the end section 20b of the lower cup 20. For this reason, the connecting pipe 38 is not inserted to the suction pipe 7 up to a given depth and a gap is formed between the end section 20b and the outer peripheral edge 38e that is a leading end of the connecting pipe 38.

If the connecting pipe 38 is rotated around the axis 7a in the direction of the arrow CCW in a state where a gap is present between the end section 20b and the outer peripheral edge 38e that is a leading end of the connecting pipe 38 in this manner, the first inclined surface 45b of the projection 44 comes into contact with the second inclined surface 53a of the falling-out prevention wall 53.

Here, the projection 45 of the engagement claw 42 is provided in a protruding state so as to be approximately orthogonal to the claw main body portion 45 and also the first inclined surface 45b is orthogonal to the direction of rotation or is inclined toward the direction of rotation as it goes to the inside in the radial direction.

On the other hand, the second inclined surface 53a of the falling-out prevention wall 53 is orthogonal to the direction of rotation of the suction pipe 7 or is inclined at the inclination angle θ toward the opposite side to the direction of rotation as it goes to the outside in the radial direction. Further, the inclination angle θ is set so as to follow the first inclined surface 45b of the projection 45 when the second inclined surface 53a and the projection 45 of the engagement claw 42 are present at positions overlapping in the direction of the axis 7a.

For this reason, even if the first inclined surface 45b and the second inclined surface 53a come into contact with each other, so that a force in the radial direction acts on the second inclined surface 53a from the first inclined surface 45b, the force acts radially or radially inward at the second inclined surface 53a. As a result, the radially outward elastic deformation of the engagement claw 42 can be prevented.

In addition, for example, if in place of the corner portion 55, the round chamfered portion 56 is formed at an area of the boundary line between the second inclined surface 53a and an outer circumferential side surface 53c, there is a case where at the time of preventing incorrect attachment of the suction filter 28, the round chamfered portion 56 and the projection 45 of the engagement claw 42 come into contact with each other, so that a radially outward force acts on the engagement claw 42. For this reason there is a concern that the projection 45 may be placed on the falling-out prevention wall 53.

That is, the corner portion 55 which is formed at the second inclined surface 53a of the falling-out prevention wall 53 functions as a fail-safe for reliably preventing the incorrect attachment of the suction filter 28 and preventing dropping-out of the suction filter 28 from the lower cup 20.

Therefore, according to the first embodiment described above, if in a state where the connection section (the connecting pipe) 38 of the suction filter 28 is coaxially connected to the fuel suction section (the suction pipe) 7 provided at the fuel pump unit 30, the connecting pipe 38 is rotated around the axis 7a thereof, the suction pipe 7 and the connecting pipe 38 cooperate with each other, so that the connection state is maintained. For this reason, there is no need to separately prepare a member such as a metal bracket for fixing the suction filter 28 in attaching the connecting pipe 38 of the suction filter 28 to the suction pipe 7, so that it is possible to reduce the number of components. Further, since the suction filter 28 is directly attached to the suction pipe 7, it is possible to easily perform the attaching and dismounting work of the suction filter 28 without using a jig. Accordingly, it is possible to improve the workability of attaching the connecting pipe 38 to the suction pipe 7.

Further, the first engagement section (the engagement claw) 42 is provided at the connecting pipe 38 of the suction filter 28, whereby it is possible to replace the suction filter 28 and the connecting pipe 38 at the same time. For this reason, for example, compared to a case where the engagement claw 42 is provided at the lower cup 20, it becomes possible to easily perform the replacement work of the engagement claw 42.

Further, the engagement claw 42 is composed of the rising portion 43 extending toward the direction of a tangent line (not shown) at the contact point 38c, and the claw main body portion 44 which is bent from the leading end side of the claw main body portion 44 of the rising portion 43 and also extends along the circumferential direction. For this reason, the engagement claw 42 and the second engagement section 51 can be easily engaged with each other by rotating the connecting pipe 38 around the axis 7a. For this reason, unlike a structure in which the engagement claw 42 and the second engagement section 51 are engaged with each other simultaneously with inserting the connecting pipe 38 into the suction pipe 7, it is acceptable if the claw main body portion 44 extends in the circumferential direction, and the claw main body portion 44 need not be extended along the direction of the axis 38d. Therefore, even if the engagement claw 42 is formed at a length required to engage with the second engagement section 51, the engagement claw 42 does not protrude in the direction of the axis 38d. For this reason, it is possible to reduce the length in the direction of the axis 38d of the connecting pipe 38 (the projecting portion 38a), so that it becomes possible to attain a reduction in the size of the fuel supply device 1. Further, since it is possible to make the fixing mechanisms composed of the engagement claw 42 and the second engagement section 51 be a simple structure, it is possible to reduce the manufacturing cost of the fuel supply device 1.

Then, the engagement claw 42 is provided with the projection 45 which restricts falling-out from the second engagement section, whereby it is possible to reliably maintain the engagement state of the engagement claw 42 and the second engagement section 51. For this reason, dropping-out of the suction pipe 7 from the connecting pipe 38 can be reliably prevented. That is, it is possible to prevent dropping-out of the suction filter 28 from the lower cup 20.

Further, the portion further on the leading end side than the projection 45 of the engagement claw 42 forms the input portion 61 which accepts an external force when the engagement claw 42 is elastically deformed radially outward. In this way, the input portion 61 acts as a power point of elastically deforming the engagement claw 42 and is located at a position farther from a supporting point (the base portion 42a) than the projection 45 that is a point of action. For this reason, it is possible to separate the projection 45 from the second engagement section 51 by elastically deforming the engagement claw 42 by applying to the input portion 61 a smaller external force than the case of directly applying an external force with the projection 45 as a power point. In this way, it is possible to easily release the engagement state of each of the engagement claws 42 and each of the second engagement sections 51. Accordingly, it is possible to improve the dismounting performance of the suction filter 28.

Further, since the input portion 61 of the engagement claw 42 on at least one side among the pair of engagement claws 42 protrudes further from the outside in the radial direction than the outer circumferential surface of the fuel pump unit 30 (the outer circumferential surface 20a of the lower cup 20) in a state where the connecting pipe 38 is connected to the suction pipe 7, when applying an external force to each of the input portions 61, it is possible to easily apply an external force to a protruding portion of the input portion 61. For this reason, it is possible to easily attach the suction filter 28 and to improve the dismounting performance of the suction filter 28.

Then, the convex portion for preventing incorrect attachment 46 is formed at the outer peripheral edge 38e that is a leading end of the connecting pipe 38 (the projecting portion 38a) and also the small groove 48 in which the convex portion for preventing incorrect attachment 46 can be fitted is formed in the end section 20b of the lower cup 20. Further, a structure is made in which in a case where the connecting pipe 38 is not mounted on the suction pipe 7 in a given direction, the connecting pipe 38 is not inserted up to a given depth. For this reason, in a case where the connecting pipe 38 is not mounted on the suction pipe 7 in a given direction at the time of attaching the suction filter 28, the engagement claw 42 is not fitted until it is located at a position where it can be completely connected to the second engagement section 51 of the suction pipe 7, and a gap is formed between the end section 20b and the outer peripheral edge 38e that is a leading end of the connecting pipe 38. Accordingly, incorrect attachment of the suction filter 28 can be prevented.

Further, the side surface on the front side in the direction of rotation of the projection 45 of the engagement claw 42 forms the first inclined surface 45b which is orthogonal to the direction of rotation or is inclined toward the direction of rotation as it goes to the inside in the radial direction, while the side surface on the side accepting the engagement claw 42 of the falling-out prevention wall forms the second inclined surface 53a which is orthogonal to the direction of rotation or is inclined toward the opposite side to the direction of rotation as it goes to the outside in the radial direction. For this reason, even if the first inclined surface 45b and the second inclined surface 53a come into contact with each other, so that a force in the radial direction acts on the second inclined surface 53a from the first inclined surface 45b, the force acts radially or radially inward at the second inclined surface 53a. As a result, the radially outward elastic deformation of the engagement claw 42 is prevented. For this reason, even in a case where the connecting pipe 38 is wrongly attached to the suction pipe 7, a radially outward force does not act on the engagement claw 42.

By the above, it is possible to prevent the projection 45 of the engagement claw 42 from being placed on the leading end of the second engagement section 51, and it becomes possible to reliably prevent incorrect attachment of the suction pipe 7 and the connecting pipe 38.

### (Second Embodiment)

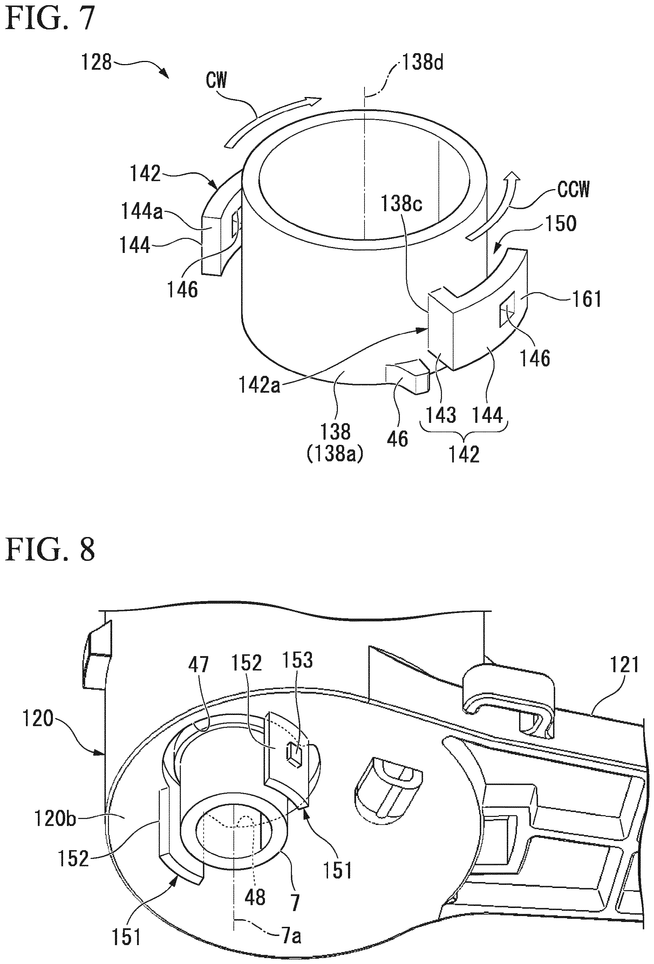

Next, a second embodiment of the invention will be described on the basis of FIGS. 7 and 8.

FIG. 7 is a perspective view of a connecting pipe 138 in this embodiment, and FIG. 8 is a perspective view of a lower cup 120 in this embodiment. In addition, with respect to the same aspect as that in the first embodiment described above, a description is made with the same reference numeral added thereto.

The fuel supply device 1 in the second embodiment is the same as that in the above-described first embodiment in that:
the fuel pump 3, the support section 4 which is fixed to the upper wall 2a of the fuel tank 2 and supports the fuel pump 3, and the suction filter 28 disposed on the lower side of the fuel pump 3 are mounted;
the support section 4 is composed of the flange unit 9 which is fixed to the upper wall 2a of the fuel tank 2, the upper cup 10 which is provided at the flange unit 9 in the inside of the fuel tank 2 and encloses the fuel pump 3, and a bottomed tube-shaped lower cup 120 which is mounted on the upper cup 10;
a support plate 121 protruding radially outward is integrally formed at an area on the end section 120b side of an outer circumferential surface 120a of the lower cup 120;
the suction pipe 7 of the fuel pump 3 protrudes downward from the end section 120b;
the connecting pipe 138 capable of being externally fitted to the suction pipe 7 is provided at the suction filter 28;
the clearance between the inner circumferential surface of the connecting pipe 138 and the outer circumferential surface of the suction pipe 7 is sealed by the O-ring 25;
the reduced diameter portion 41 is integrally formed on the inner circumferential surface of a projecting portion 138a of the connecting pipe 138;
the convex portion for preventing incorrect attachment 46 is provided at a lower leading end of the projecting portion 138a; and
the small groove 48 in which the convex portion for preventing incorrect attachment 46 can be fitted is formed in the end section 120b of the lower cup 120.

As shown in FIG. 7, at the connecting pipe 138 (the projecting portion 138a) of the suction filter 28 in this embodiment, a pair of elastically deformable engagement claws 142 is provided at positions which are point-symmetrical with an axis 138d of the projecting portion 138a as the center. Further, the engagement claw 142 is formed in an approximate L-shape in a transverse cross-section.

That is, if the place where a base portion 142a of the engagement claw 142 is provided, of an outer circumferential surface 138b of the connecting pipe 138, is set to be a contact point 138c, the portion (a rising portion 143) on the base portion 142a side of the engagement claw 142 extends toward the direction of a tangent line (not shown) at the contact point 138c. Further, the engagement claw 142 is bent from the leading end side of the rising portion 142 and also extends along a circumferential direction. The portion further on the front side than the leading end side of the rising portion 143 of the engagement claw 142 is set to be a claw main body portion 144. Further, an opening portion 146 is formed in the central area in a plan view of the claw main body portion 144.

On the other hand, as shown in FIG. 8, at the end section 120b of the lower cup 120, a pair of second engagement sections 151 is respectively provided in a protruding state at places corresponding to the pair of engagement claws 142. The second engagement section 151 is composed of a supporting wall 152 capable of being interposed between the connecting pipe 138 and the claw main body portion 144 and having an arc shape in a cross-section, and an engagement protruding portion 153. The engagement protruding portion 153 is provided in a protruding state at a site corresponding to the opening portion 146, of the radially outer surface of the supporting wall 152. The engagement protruding portion 153 is formed so as to be capable of being fitted into the opening portion 146 of the claw main body portion 144.

Next, the mounting and dismounting procedure of the suction filter 28 in this embodiment will be described.

Here, the attaching procedure of the fuel supply device 1 is the same as that in the first embodiment described previously. First, when mounting the suction filter 128 on the lower cup 120, the connecting pipe 138 is externally fitted to the suction pipe 7 in a state where the axis 138d of an upper opening of the connecting pipe 138 of the suction filter 128 conforms to the axis 7a of the suction pipe 7.

At this time, the position of each of the engagement claws 142 of the connecting pipe 138 is adjusted so as to become a position which does not interfere with each second engagement section 151 which is provided in a protruding state at the lower cup 120. Further, the position of the convex portion for preventing incorrect attachment 46 of the connecting pipe 138 is adjusted so as to become a position corresponding to the groove portion (the small groove 48) of the lower cup 120.

In this state, the connecting pipe 138 is rotated around the axis 7a in the counter-clockwise direction (refer to the arrow CCW in FIG. 7). Then, the supporting wall 152 of the lower cup 120 is interposed in a gap 150 between the connecting pipe 138 and the claw main body portion 144. Then, a leading end 144a of the claw main body portion 144 comes into contact with the engagement protruding portion 153 of the supporting wall 152.

If the connecting pipe 138 is further rotated around the axis 7a, a force in a radial direction acts radially outward at the leading end 144a. As a result, the claw main body portion 144 is pushed and spread radially outward, so that the claw main body portion 144 is placed on the radially outer side surface of the engagement protruding portion 153.

If the connecting pipe 138 is further rotated around the axis 7a, when the position of the engagement protruding portion 153 and the position of the opening portion 146 conform to each other, a radially inward restoring force acts on the engagement claw 142, so that the engagement protruding portion 153 is engaged with the opening portion 146. In this way, the engagement claw 142 is held on the second engagement section 151. By the above, the connecting pipe 138 is externally fitted and fixed to the suction pipe 7, so that mounting of the suction filter 28 on the lower cup 120 is completed.

On the other hand, in the case of dismounting the suction filter 28 from the lower cup 120, the engagement claw 142 is elastically deformed radially outward by inputting an external force to a leading end (an input portion 161) of the claw main body portion 144 of each of the engagement claws 142. Then, each opening portion 146 is separated from each engagement protruding portion 153, so that the engagement state of each of the second engagement sections 151 and each of the engagement claws 142 is released. In this state, the connecting pipe 138 is rotated around the axis 7a in the clockwise direction (refer to the arrow CW in FIG. 7). In this way, each engagement claw 142 is pulled out of each gap 150, so that the suction filter 28 can be dismounted from the lower cup 120.

According to this embodiment having the above-described configuration, in addition to the same effects as those in the first embodiment described previously, the engagement claw 142 can be formed larger than the engagement claw 42 in the first embodiment described previously. For this reason, it becomes possible to increase the rigidity of the engagement claw 142. Further, since it is possible to make the contact area between the engagement claw 142 and the second engagement section 151 large compared to the first embodiment, it becomes possible to increase the holding force of the connecting pipe 138 by the engagement claw 142. Further, since it is possible to make the structures of the engagement claw 142 and the second engagement section 151 simple, the manufacturing cost of the fuel supply device 1 can be reduced.

In addition, the invention is not limited only to the configuration of each embodiment described above and includes configurations in which various changes are added to each embodiment described above within a scope that does not depart from the purpose of the invention.

For example, in the embodiments described above, a description has been made with regard to a case where the connecting pipe 38 (138) of the suction filter 28 is externally fitted and fixed to the suction pipe 7 which protrudes from the end section 20b (120b) of the lower cup 20 (120). However, a fixing method of the connecting pipe 38 (138) to the suction pipe 7 is not limited only thereto and each configuration may also be changed such that the connecting pipe 38 (138) is internally fitted and fixed to the suction pipe 7.

In a case where the connecting pipe 38 (138) is internally fitted and fixed to the suction pipe 7, it is acceptable if fixing mechanisms which replace the engagement claw 42 (142) provided in a protruding state at the connecting pipe 38 (138) or the second engagement section 51 (151) provided in a protruding state at the lower cup 20 (120) is provided. For example, a configuration is also acceptable in which a groove being long in the circumferential direction is formed in the outer circumferential surface of the suction pipe 7 and a projection capable of being fitted into the groove of the suction pipe 7 is formed at the connecting pipe 38 or 138. Such fixing mechanisms are not limited to the above-described mechanisms, and provided that if the connecting pipe 38 (138) is rotated around an axis after the connecting pipe 38 (138) is externally fitted to the suction pipe 7, the suction pipe 7 and the connecting pipe 38 (138) are engaged with each other, any structure can be employed.

Further, in the embodiments described above, a description has been made with regard to a case where the convex portion for preventing incorrect attachment 46 is provided at the leading end of the connecting pipe 38 (138) and the small groove 48 in which the convex portion for preventing incorrect attachment 46 can be fitted is formed in the end section 20b (120b) of the lower cup 20 (120). However, the configuration of engaging the connecting pipe 38 (138) with the suction pipe 7 is not limited thereto and a configuration is also acceptable in which the convex portion for preventing incorrect attachment 46 is formed at the end section 20b (120b) of the lower cup 20 (120) and a groove in which the convex portion for preventing incorrect attachment 46 can be fitted is formed in the leading end of the connecting pipe 38 (138). In the case of making the suction pipe 7 and the connecting pipe 38 (138) be such configurations, it is acceptable if the wall thickness in a radial direction of the connecting pipe 38 (138) is set to be a thickness allowing a groove to be formed therein.

Further, in the embodiments described above, a description has been made with regard to the case of a configuration in which the pair of engagement claws 42 (142) is provided in a protruding state at the connecting pipe 38 (138) and the pair of second engagement sections 51 (151) is provided in a protruding state at the lower cup 20 (120). However, the numbers of engagement claws 42 (142) and second engagement sections 51 (151) are not limited thereto and it is acceptable if at least one engagement claw 42 (142) is provided in a protruding state at the connecting pipe 38 (138) and at least one second engagement section 51 (151) is provided in a protruding state at the lower cup 20 (120).

### Reference Signs List

1: fuel supply device
2: fuel tank
2a: upper wall
3: fuel pump
4: support section
7: suction pipe (fuel suction section)
7a: axis
20, 120: lower cup
20a, 120a: outer circumferential surface
20b, 120b: end section
28: suction filter
30: fuel pump unit
38, 138: connecting pipe (connection section)
38b, 138b: outer circumferential surface
38c: outer peripheral edge
38d: axis
42, 142: engagement claw (first engagement section)
43, 143: rising portion
44, 144: claw main body portion
45, 145: projection
45b: first inclined surface
46: convex portion (convex portion for preventing incorrect attachment)
47: groove
48: small groove (groove portion)
51, 151: second engagement section
52: supporting portion
53: falling-out prevention wall
53a: second inclined surface
54: acceptance concavity portion
61, 161: input portion

## Claims

1. A fuel supply device (1) comprising:
a fuel pump unit (30) having a fuel pump (3) which is disposed in a fuel tank (2) and pumps up fuel in the fuel tank (2), thereby pumping the fuel to an internal-combustion engine, and a support section which fixes the fuel pump to an inner wall surface of the fuel tank; and
a suction filter (28) which is mounted on a fuel suction section (7) provided at the fuel pump unit (30) and filters the fuel that is suctioned into the fuel pump (3),
wherein the suction filter (28) has a connecting pipe (38, 138) which protrudes toward the fuel pump unit (30),
a filtering medium (36) of the suction filter (28) is disposed so as to face the bottom surface of the support section (4),
at both the fuel pump unit (30) and the connecting pipe (38, 138), fixing mechanisms (42, 51, 142, 151) are provided which maintain a connection state of the connecting pipe (38, 138) in cooperation with each other in a case where the connecting pipe (38, 138) has been rotated around an axis thereof in a state where the connecting pipe (38, 138) has been connected to the fuel suction section (7),
each of the fuel suction section (7) and the connecting pipe (38, 138) has a tubular shape and also the connecting pipe (38, 138) is connected to the fuel suction section (7),
the fixing mechanisms (42, 51, 142, 151) include
a first engagement section (42, 142) provided on the suction filter side, and
a second engagement section (51, 151) which is formed at the fuel pump unit (30)
**characterized in that**:
the connecting pipe (38, 138) is coaxially connected to the fuel suction section (7) in a state of being able to come into contact with the bottom surface of the support section (4),
the second engagement section (51, 151) is configured to accept the first engagement section (42, 142) from a circumferential direction, thereby being engaged with the first engagement section, (42, 142)
the first engagement section (42, 142) extends in a circumferential direction of the connecting pipe (38, 138), is elastically deformable, and is provided with a projection (45) which restricts falling-out from the second engagement section (51, 151), and
the second engagement section (51, 151) has a falling-out prevention portion (53) which prevents dropping-out of the suction filter (28) in an axial direction.

2. The fuel supply device (1) according to Claim 1, **characterized in that** the projection (45) is disposed at a middle position in a longitudinal direction of the first engagement section (42, 142), and
a portion further on a leading end side than the projection (45) of the first engagement section (42, 142) forms an input portion (61, 161) which accepts an external force when elastically deforming the first engagement section (42, 142).

3. The fuel supply device (1) according to Claim 2, **characterized in that** at least one of the input portions (61, 161) protrudes further to an outside in a radial direction than an outer circumferential surface of the fuel pump unit (30) in a state where the connecting pipe (38, 138) has been connected to the fuel suction section (7).

4. The fuel supply device (1) according to any one of Claims 1 to 3, **characterized in that** it further comprises:
a convex portion (46) for preventing incorrect attachment provided at one of an outer peripheral edge on the fuel pump unit side of the connecting pipe (38, 138) and the fuel pump unit (30); and
a groove portion (48) which is provided at other one of the outer peripheral edge on the fuel pump unit side of the connecting pipe (38, 138) and the fuel pump unit (30), and in which the convex portion (46) for preventing incorrect attachment can be fitted,
wherein a size in a circumferential direction of the groove portion (48) is set so as to permit turning around an axis of the convex portion (46) for preventing incorrect attachment only by a predetermined range.

5. The fuel supply device (1) according to Claim 1, **characterized in that** the first engagement section (42, 142) is provided in a pair at positions which are point-symmetrical with an axis of the connecting pipe (38, 138) as a center, and also the projection (45) is provided in a protruding state on a radially inner surface side of each of the first engagement sections (42, 142),
a surface on a front side in a direction of rotation of each of the projections (45) forms a first inclined surface (45b) which is orthogonal to the direction of rotation or is inclined toward the direction of rotation as it goes to an inside in a radial direction,
the second engagement section (51, 151) is provided in a pair at the fuel pump unit (30),
a concave portion (54) which accepts each of the first engagement sections (42, 142) is formed on a base end side of each of the second engagement sections (51, 151), while a falling-out prevention wall (53) which restricts the falling-out in an axial direction of each of the first engagement sections (42, 142) inserted into the concave portion (54) is formed on a leading end side of each of the second engagement sections (51, 151), and
a side surface on a side accepting each of the first engagement sections (42, 142), of each of the falling-out prevention walls (53), forms a second inclined surface (53a) which is orthogonal to the direction of rotation or is inclined toward an opposite side to the direction of rotation as it goes to an outside in the radial direction.

## Patentansprüche

1. Eine Kraftstoffzuführvorrichtung (1) mit:
einer Kraftstoffpumpeneinheit (30) mit einer Kraftstoffpumpe (3), die in einem Kraftstofftank (2) angeordnet ist und Kraftstoff in den Kraftstofftank (2) hinaufpumpt und dadurch den Kraftstoff zu einem Verbrennungsmotor pumpt, sowie eine Haltevorrichtung, über die die Kraftstoffpumpe an einer Innenwandfläche des Kraftstofftanks befestigt ist; und
mit einem Ansaugfilter (28), der an einem Kraftstoffansaugabschnitt (7), der an der Kraftstoffpumpeneinheit (30) vorgesehen ist, montiert ist, der den Kraftstoff, der in die Kraftstoffpumpe (3) gesaugt wird, filtert,
wobei der Ansaugfilter (28) über ein Verbindungsrohr (38, 138) verfügt, das zur Kraftstoffpumpeneinheit (30) hin vorsteht,
mit einem Filtermedium (36) des Ansaugfilters (28), das so angeordnet ist, dass es zur Bodenfläche der Haltevorrichtung (4) zeigt,
wobei sowohl an der Kraftstoffpumpeneinheit (30) als auch am Verbindungsrohr (38, 138) Befestigungsmittel (42, 51, 142, 151) vorgesehen sind, die dem Verbindungsstatus des Verbindungsrohrs (38, 138) aufrechterhalten, indem sie miteinander zusammenwirken, wenn das Verbindungsrohr (38, 138) um seine Achse gedreht wird, wenn das Verbindungsrohr (38, 138) mit dem Kraftstoffansaugabschnitt (7) verbunden ist,
wobei sowohl der Kraftstoffansaugabschnitt (7) wie das Verbindungsrohr (38, 138) rohrförmig sind und das Verbindungsrohr (38, 138) außerdem mit dem Kraftstoffansaugabschnitt (7) verbunden ist,
wobei die Befestigungsmittel (42, 51, 142, 151)
einen ersten Verbindungsabschnitt (42, 142), der auf der Seite des Ansaugfilters vorgesehen ist und
einen zweiten Verbindungsabschnitt (51, 151), der an der Kraftstoffpumpeneinheit (30) gebildet ist, umfassen,
**dadurch gekennzeichnet, dass**:
das Verbindungsrohr (38, 138) koaxial mit dem Kraftstoffansaugabschnitt (7) so verbunden ist, dass es in der Lage ist, in Kontakt mit der Bodenfläche der Haltevorrichtung (4) zu kommen,
der zweite Verbindungsabschnitt (51, 151) ist konfiguriert, um den ersten Verbindungsabschnitt (42, 142) aus einer Umfangsrichtung aufzunehmen und dadurch mit dem ersten Verbindungsabschnitt (42, 142) verbunden wird,
der erste Verbindungsabschnitt (42, 142), der in einer Umfangsrichtung des Verbindungsrohrs (38, 138) verläuft, elastisch verformbar ist und mit einer Auskragung (45) versehen ist, die ein Herausfallen aus dem zweiten Verbindungsabschnitt (51, 151) verhindert, und
der zweite Verbindungsabschnitt (51, 151) einen Abschnitt zur Verhinderung des Herausfallens (53) hat, der verhindert, dass er in axialer Richtung aus dem Ansaugfilter (28) hinausfällt.

2. Kraftstoffzuführvorrichtung (1) gemäß Anspruch 1, **dadurch gekennzeichnet, dass** die Auskragung (45) in einer Mittelposition in Längsrichtung des ersten Verbindungsabschnitts (42, 142) angeordnet ist, und
ein Abschnitt, weiter in Richtung vorderen Endes als die Auskragung (45) des ersten Verbindungsabschnitts (42, 142), einen Eingangsabschnitt (61, 161) bildet, der eine externe Kraft aufnimmt, wenn der erste Verbindungsabschnitt (42, 142) elastisch verformt wird.

3. Kraftstoffzuführvorrichtung (1) gemäß Anspruch 2, **dadurch gekennzeichnet, dass** mindestens einer der Eingangsabschnitte (61, 161) weiter vorragt, bis zur Außenseite in radialer Richtung, als eine Außenumfangsfläche der Kraftstoffpumpeneinheit (30), falls das Verbindungsrohr (38, 138) mit dem Kraftstoffansaugabschnitt (7) verbunden ist.

4. Kraftstoffzuführvorrichtung (1) gemäß einem der Ansprüche 1 bis 3, **dadurch gekennzeichnet, dass** sie weiterhin umfasst:
einen konvexen Abschnitt (46), um eine fehlerhafte Verbindung zu vermeiden, der an einer der peripheren Außenkanten der Kraftstoffpumpeneinheitsseite des Verbindungsrohrs (38, 138) und der Kraftstoffpumpeneinheit (30) vorgesehen ist; und
ein Nutabschnitt (48), der an einer anderen der peripheren Außenkanten der Kraftstoffpumpeneinheitsseite des Verbindungsrohrs (38, 138) und der Kraftstoffpumpeneinheit (30) vorgesehen ist, und in dem der konvexe Abschnitt (46) um eine fehlerhafte Verbindung zu vermeiden, eingepasst werden kann, wobei eine Größe in einer Umfangsrichtung des Nutabschnitts (48) so eingestellt wird, dass das Drehen um eine Achse des konvexen Abschnitts (46) nur innerhalb eines vorher festgelegten Bereichs möglich ist, um eine fehlerhafte Verbindung zu vermeiden.

5. Kraftstoffzuführvorrichtung (1) gemäß Anspruch 1, **dadurch gekennzeichnet, dass** der erste Verbindungsabschnitt (42, 142) an paarweisen Positionen vorgesehen ist, die punktsymmetrisch sind, mit einer Achse des Verbindungsrohrs (38, 138) als Zentrum, und auch die Auskragung (45) in einem vorkragenden Zustand auf einer radialen Innenfläche jedes der ersten Verbindungsabschnitte (42, 142) vorgesehen ist,
eine Fläche auf einer Vorderseite in Drehrichtung jeder der Auskragungen (45) eine erste geneigte Fläche (45b) bildet, die orthogonal zur Drehrichtung oder zur Drehrichtung geneigt ist, wenn sie nach einer Innenseite in radialer Richtung zeigt, dass der zweite Verbindungsabschnitt (51, 151) paarweise an der Kraftstoffpumpeneinheit (30) vorgesehen ist,
dass ein konkaver Abschnitt (54), der jeden der ersten Verbindungsabschnitts (42, 142) aufnehmen kann, an einer Basisendseite jedes der zweiten Verbindungsabschnitte (51, 151) gebildet wird, während eine Ausfallsicherungswand (53), die ein Herausfallen in axialer Richtung jedes der ersten Verbindungsabschnitte (42, 142) beschränkt, eingesetzt in den konkaven Abschnitt (54) an einer Seite des vorderen Endes jedes der zweiten Verbindungsabschnitte (51, 151) gebildet wird, und
dass eine Seitenfläche auf einer Seite, die jeden der ersten Verbindungsabschnitte (42, 142) jeder der Ausfallsicherungswände (53) aufnimmt, eine zweite geneigte Fläche (53a) bildet, die orthogonal zur Drehrichtung ist oder entgegen der Drehrichtung geneigt ist, wenn sie nach einer Außenseite in radialer Richtung zeigt.

## Revendications

1. Dispositif d'alimentation en carburant (1) comprenant :
une unité de pompe à carburant (30) ayant une pompe à carburant (3) qui est disposée dans un réservoir de carburant (2) et pompe du carburant dans le réservoir de carburant (2), pompant ainsi le carburant vers un moteur à combustion interne, et une section de support qui fixe la pompe à carburant à une surface de paroi interne du réservoir de carburant ; et
un filtre d'aspiration (28) qui est monté sur une section d'aspiration de carburant (7) prévue au niveau de l'unité de pompe à carburant (30) et filtre le carburant qui est aspiré dans la pompe à carburant (3),
dans lequel le filtre d'aspiration (28) a un tuyau de raccordement (38, 138) qui fait saillie vers l'unité de pompe à carburant (30),
un matériau filtrant (36) du filtre d'aspiration (28) est disposé de manière à faire face à la surface inférieure de la section de support (4),
au niveau à la fois de l'unité de pompe à carburant (30) et du tuyau de raccordement (38, 138), des mécanismes de fixation (42, 51, 142, 151) sont prévus qui maintiennent un état de raccordement du tuyau de raccordement (38, 138) en coopération l'un avec l'autre dans un cas où le tuyau de raccordement (38, 138) a subi une rotation autour d'un axe de celui-ci dans un état où le tuyau de raccordement (38, 138) a été raccordé à la section d'aspiration de carburant (7),
chacun de la section d'aspiration de carburant (7) et du tuyau de raccordement (38, 138) a une forme tubulaire et également le tuyau de raccordement (38, 138) est raccordé à la section d'aspiration de carburant (7),
les mécanismes de fixation (42, 51, 142, 151) incluent
une première section de mise en prise (42, 142) prévue du côté filtre d'aspiration, et
une seconde section de mise en prise (51, 151) qui est formée au niveau de l'unité de pompe à carburant (30)
**caractérisé en ce que** :
le tuyau de raccordement (38, 138) est raccordé de manière coaxiale à la section d'aspiration de carburant (7) dans un état lui permettant de venir en contact avec la surface inférieure de la section de support (4),
la seconde section de mise en prise (51, 151) est configurée pour accepter la première section de mise en prise (42, 142) à partir d'une direction circonférentielle, étant ainsi en prise avec la première section de mise en prise, (42, 142)
la première section de mise en prise (42, 142) s'étend dans une direction circonférentielle du tuyau de raccordement (38, 138), est élastiquement déformable, et est dotée d'une saillie (45) qui restreint le dégagement de la seconde section de mise en prise (51, 151), et
la seconde section de mise en prise (51, 151) a une partie de prévention de dégagement (53) qui prévient la chute du filtre d'aspiration (28) dans une direction axiale.

2. Dispositif d'alimentation en carburant (1) selon la revendication 1, **caractérisé en ce que** la saillie (45) est disposée au niveau d'une position centrale dans une direction longitudinale de la première section de mise en prise (42, 142), et
une partie plus éloignée d'un côté d'extrémité avant que la saillie (45) de la première section de mise en prise (42, 142) forme une partie d'entrée (61, 161) qui accepte une force externe lors de la déformation élastique de la première section de mise en prise (42, 142).

3. Dispositif d'alimentation en carburant (1) selon la revendication 2, **caractérisé en ce qu'**au moins l'une des parties d'entrée (61, 161) fait saillie plus loin vers un extérieur dans une direction radiale qu'une surface circonférentielle externe de l'unité de pompe à carburant (30) dans un état où le tuyau de raccordement (38, 138) a été raccordé à la section d'aspiration de carburant (7).

4. Dispositif d'alimentation en carburant (1) selon l'une quelconque des revendications 1 à 3, **caractérisé en ce qu'**il comprend en outre :
une partie convexe (46) pour prévenir l'attache incorrecte prévue au niveau de l'un d'un bord périphérique externe du côté de l'unité de pompe à carburant du tuyau de raccordement (38, 138) et de l'unité de pompe à carburant (30) ; et
une partie de rainure (48) qui est prévue au niveau de l'autre du bord périphérique externe du côté de l'unité de pompe à carburant du tuyau de raccordement (38, 138) et de l'unité de pompe à carburant (30), et dans laquelle la partie convexe (46) pour prévenir l'attache incorrecte peut être insérée,
dans lequel une taille dans une direction circonférentielle de la partie de rainure (48) est définie de façon à permettre la rotation autour d'un axe de la partie convexe (46) pour prévenir l'attache incorrecte uniquement par une plage prédéterminée.

5. Dispositif d'alimentation en carburant (1) selon la revendication 1, **caractérisé en ce que** la première section de mise en prise (42, 142) est prévue en une paire au niveau de positions qui sont symétriques par rapport à un point avec un axe du tuyau de raccordement (38, 138) en tant que centre, et également la saillie (45) est prévue dans un état de saillie d'un côté de la surface radialement interne de chacune des premières sections de mise en prise (42, 142),
une surface d'un côté avant dans une direction de rotation de chacune des saillies (45) forme une première surface inclinée (45b) qui est orthogonale à la direction de rotation ou est inclinée vers la direction de rotation en allant vers un intérieur dans une direction radiale,
la seconde section de mise en prise (51, 151) est prévue en une paire au niveau de l'unité de pompe à carburant (30),
une partie concave (54) qui accepte chacune des premières sections de mise en prise (42, 142) est formée d'un côté d'extrémité basale de chacune des secondes sections de mise en prise (51, 151), tandis qu'une paroi de prévention de dégagement (53) qui restreint le dégagement dans une direction axiale de chacune des premières sections de mise en prise (42, 142) insérée dans la partie concave (54) est formée d'un côté d'extrémité avant de chacune des secondes sections de mise en prise (51, 151), et
une surface latérale d'un côté acceptant chacune des premières sections de mise en prise (42, 142), de chacune des parois de prévention de dégagement (53), forme une seconde surface inclinée (53a) qui est orthogonale à la direction de rotation ou est inclinée vers un côté opposé à la direction de rotation en allant vers un extérieur dans la direction radiale.
